# EUROPÄISCHE PATENTSCHRIFT

(11) **EP 0 504 720 B1**
(45) Veröffentlichungstag und Bekanntmachung des Hinweises auf die Patenterteilung: **09.08.1995**
(21) Anmeldenummer: 92104137.2
(22) Anmeldetag: 11.03.1992
(51) Int. Cl.: A01C 17/00

(54) **Schleuderdüngerstreuer**
Fertilizer broadcaster
Epandeur d'engrais centrifuge

(30) Priorität: 22.03.1991 DE 4109416
(43) Veröffentlichungstag der Anmeldung: 23.09.1992
(73) Patentinhaber: Amazonen-Werke H. Dreyer GmbH & Co. KG, D-49205 Hasbergen (DE)
(72) Erfinder: Dreyer, Heinz, Dr. Dipl.-Ing., W-4507 Hasbergen (DE)

(56) Entgegenhaltungen:
- EP-A- 0 327 941
- DE-A- 3 438 711
- DE-B- 1 180 562
- GB-A- 2 144 021

## Beschreibung

Die Erfindung betrifft einen Schleuderdüngerstreuer gemäß des Oberbegriffes des Patentanspruches 1.

Ein derartiger Schleuderdüngerstreuer ist in der EP 03 27 941 A1 beschrieben. Bei diesem Schleuderdüngerstreuer sind die Schleuderscheiben um eine quer zur Fahrtrichtung verlaufende Achse verschwenkbar am Rahmen der Maschine angeordnet und in unterschiedlichen Stellungen einstellbar. Somit sind die Schleuderscheiben in unterschiedlichen Neigungen zur Horizontalen einstellbar. Die Schleuderscheiben werden über einen Winkelantrieb angetrieben und das Gehäuse des Winkelgetriebes ist verschwenkbar angeordnet.

In welcher Weise die Verstellung erfolgt, ist dieser Druckschrift nicht entnehmbar.

Der Erfindung liegt die Aufgabe zugrunde, auf einfachste Weise eine Verstellmöglichkeit für die Schleuderscheiben zu schaffen.

Diese Aufgabe wird erfindungsgemäß durch die kennzeichnenden Merkmale des Anspruches 1 gelöst. Über diese Stelleinrichtung können die Schleuderscheiben gegenüber den ihnen zugeordneten Dosiereinrichtungen verstellt werden, um in individueller Weise eine Korrektur des Streubildes zu erreichen, damit der Dünger gleichmäßig verteilt ausgebracht wird. Weiterhin kann über diese Stelleinrichtung auch eine Einstellung der Schleuderscheiben für verschiedene Düngungsarten erfolgen. Dadurch, daß die Stellantriebe für die Verschwenkung der Schleuderscheiben mit einer Fernbedienungseinrichtung verbunden sind, ist es möglich, daß die Verstellung der Schleuderscheiben während der Streuarbeit vom Schleppersitz aus individuell erfolgen kann.

Bei einem Schleuderdüngerstreuer, bei dem unterhalb des Vorratsbehälters zumindest vier Schleuderscheiben angeordnet sind, ist vorgesehen, daß zumindest jeder zweiten Schleuderscheibe ein eigener Stellantrieb zugeordnet ist. Hierdurch ist es möglich, wenn jeder Schleuderscheibe ein eigener Stellantrieb zugeordnet ist, jede Schleuderscheibe unabhängig von den anderen Schleuderscheiben einzustellen, so daß eine individuelle Streubildkorrektur möglich ist. Weiterhin ist hierdurch die Grundvorraussetzung dafür geschaffen, daß den beiden inneren Schleuderscheiben ein gemeinsamer Stellantrieb zugeordnet ist, so daß die beiden inneren Schleuderscheiben gemeinsam gegenüber den beiden äußeren Schleuderscheiben verstellbar sind, wobei ebenfalls den beiden äußeren Schleuderscheiben ein Stellantrieb derart zugeordnet ist, daß diese beiden äußeren Schleuderscheiben ebenfalls gemeinsam verschwenkbar sind.

In einer Weiterbildung ist vorgesehen, daß die Stellantriebe mit einer elektronischen Regeleinrichtung, beispielsweise einem programmierbaren elektronischen Rechner verbunden sind, so daß nach der Vorgabe des in dem elektronischen Rechner abgespeicherten Programmes die Schleuderscheiben einstellbar oder verstellbar sind. Hierdurch erfolgt dann nach der Vorgabe der Einsatzbedingungen eine automatische Einstellung der Schleuderscheiben gegenüber den ihnen zugeordneten Dosiereinrichtungen.

Weiterhin ist in einer Ausführung vorgesehen, daß die Schleuderscheiben um eine quer zur Fahrtrichtung verlaufende Achse verschwenkbar sind. In einer anderen Ausführungsform ist vorgesehen, daß die Schleuderscheiben derart am Rahmen des Schleuderdüngerstreuers angeordnet sind, daß sie sowohl um eine in wie auch um eine quer zur Fahrtrichtung verlaufende Achse verschwenkbar sind, wobei zum Verschwenken der Schleuderscheiben in der jeweiligen Richtung ein eigener Stellmotor vorgesehen ist. Aufgrund dieser Maßnahmen können die Schleuderscheiben einfach in die jeweils erforderliche Lage, die für den erforderlichen Einsatzzweck zur Erreichung des gewünschten Streuergebnis erforderliche Stellung erforderlich ist, gebracht werden.

In einer Ausführung ist vorgesehen, daß die Schwenkachse, um welche die Schleuderscheibe verschwenkbar ist, mit der Mittellinie der Antriebswelle des Winkelantriebes zusammenfällt. Hierdurch ist eine einfachste Anordnung und Befestigung eines schwenkbaren Winkelantriebes möglich, weil das Winkelgetriebe um die liegende Antriebswelle verschwenkt wird. Hierzu ist das Antriebsgehäuse für die Schleuderscheibe schwenkbar am Rahmen in einem Schwenklager angeordnet.

Um eine unterschiedliche Einstellung der Schleuderscheiben zueinander zu ermöglichen, ist vorgesehen, daß jedes Antriebsgehäuse für die Schleuderscheiben schwenkbar angeordnet ist. Hierdurch ist es möglich, sich unterschiedlichen Ausbringverhältnissen, beispielsweise zum Grenzstreuen anpassen zu können.

Für eine sehr einfache Einstellung der Schleuderscheiben in dem gewünschten Neigungswinkel zur Horizontalen ist vorgesehen, daß den Schleuderscheibenantriebsgehäusen eine Stelleinrichtung zugeordnet ist, mittels welcher die Schleuderscheiben verschwenkbar sind. Um eine äußerst genaue Einstellung zu erreichen, ist vorgesehen, daß die Schleuderscheiben, vorzugsweise über einen Stellantrieb, verschwenkbar sind.

Um auch während der Arbeit, d.h., während des Ausbringens von Dünger, eine Verschwenkung der Schleuderscheiben vornehmen zu können, ist vorgesehen, daß der Stellantrieb mit einer Fernbedienungseinrichtung verbunden ist.

Bei Schleuderdüngerstreuern, bei denen seitlich neben den Schleuderscheiben an den Außenseiten des Schleuderdüngerstreuers Düngerleitelemente angeordnet sind, ist vorgesehen, daß die Leitelement gemeinsam mit den Schleuderscheibenantriebsgehäusen verschwenkbar sind. Um eine einfache Handhabung zu erreichen, ist vorgesehen, daß die Leitelemente gleichzeitig mit der zugeordneten Schleuderscheibe verschwenkbar sind. Hierbei können die Schwenkbewegungen der Schleuderscheiben und der zugeordneten Düngerleitelemente über eine Verstelleinrichtung miteinander verknüpft sein.

Durch eine erfindungsgemäße Maßnahme der Neigungsverstellung der Schleuderscheiben ergeben sich die folgenden Vorteile:
Durch die erfindungsgemäße Neigungsverstellung der Schleuderscheiben wird auch ein Scheibenwechsel einfacher durchführbar, wenn die Scheibe nach hinten geneigt ist. Weiterhin ergibt sich der Vorteil bei nach hinten-unten geneigter Scheibe, daß die Aufgabefläche des Düngers gegen die Drehrichtung der Schleuderscheibe nach vorn verlagert wird, so daß hierdurch das Streubild in der Mitte stärker als am Außenrand beeinflußt wird. Durch Schwenken der Scheibe nach hinten-oben wandert der Aufgabepunkt in Drehrichtung nach hinten, also wird die Düngermenge mehr nach außen verlagert. Somit läßt sich auf einfachste Weise vom Schleppersitz aus das Streubild verändern und korrigieren. Darüberhinaus wird bei Düngerstreuern, bei denen auf der Außenseite neben den Schleuderscheiben Düngerleitelemente angeordnet sind bei nach hinten-unten geschwenkten Schleuderscheiben der Streufächer nach hinten erheblich verkürzt, ohne daß der Streufächer nach vorn verlängert wird.

Weiterhin ist durch diese Anordnung der Schleuderscheiben die Grundvorraussetzung dafür geschaffen, daß auf einfache Weise während der Streuarbeit die Schleuderscheiben ständig um eine quer zur Fahrtrichtung verlaufende Achse hin- und herschwingend angetrieben werden können. Hierdurch läßt sich unter bestimmten Voraussetzungen eine größere Stabilität des Streubildes bei problematischen Düngersorten erreichen. Hierzu ist dann der Stellantrieb über eine Regeleinrichtung entsprechend umzusteuern oder es ist ein entsprechender Schwingungsantrieb für das Hin- und Herschwingen der Schleuderscheiben vorzusehen.

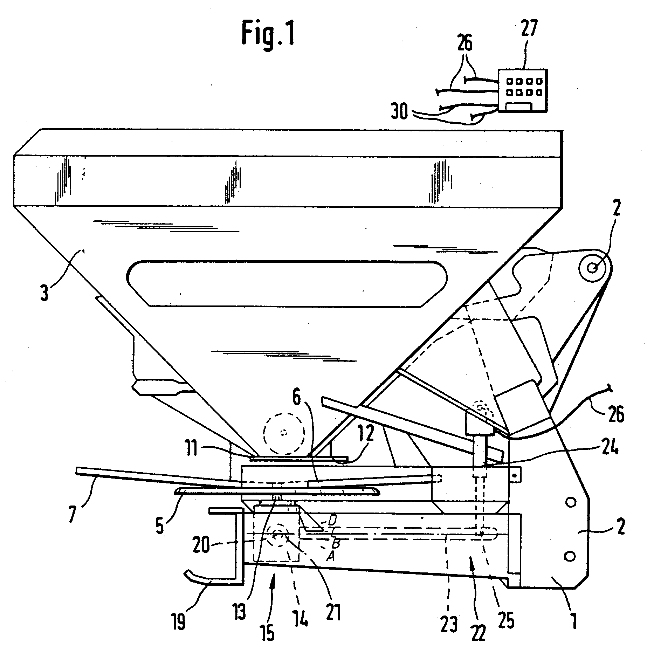

Weitere Einzelheiten der Erfindung sind den übrigen Unteransprüchen, der Beispielsbeschreibung und den Zeichnungen zu entnehmen. Hierbei zeigen
- Fig. 1: den Schleuderdüngerstreuer in der Seitenansicht,
- Fig. 2: den Schleuderdüngerstreuer in der Ansicht von hinten,

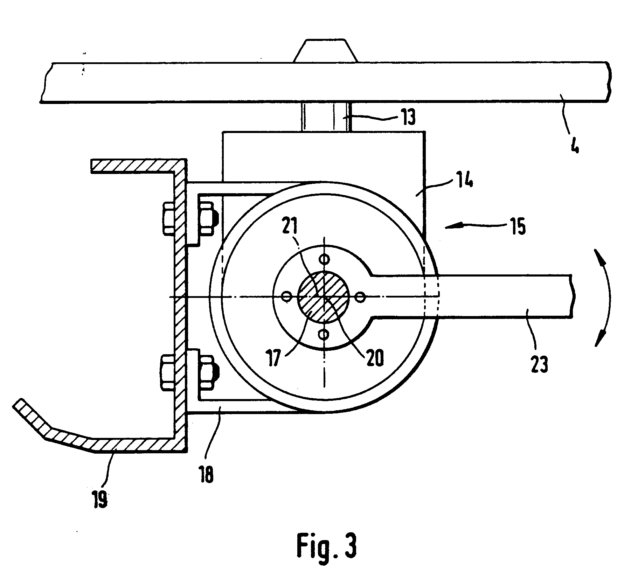

- Fig. 3: die Anordnung eines Winkelgetriebes einer Schleuderscheibe in der Ansicht III - III,
- Fig. 4: einen weiteren Schleuderdüngerstreuer, der als Vier-Scheiben-Schleuderdüngerstreuer ausgebildet ist, in der Ansicht von hinten und in Prinzipdarstellung und
- Fig. 5: den Schleuderdüngerstreuer gemäß Fig. 4 in der Seitenansicht in Prinzipdarstellung und in vergrößertem Maßstab.

Der Schleuderdüngerstreuer weist den Rahmen 1, an dem Dreipunktkupplungselemente 2 angeordnet sind, den Vorratsbehälter 3 sowie die Schleuderscheiben 4 und 5 mit den Wurfelementen 6 und 7 auf.

Der Vorratsbehälter ist in seinem unteren Bereich durch das dachförmige Mittelteil 8 in die beiden Auslauftrichter 9 und 10 aufgeteilt. Am unteren Bereich der Auslauftrichter 9 und 10 ist jeweils die Bodenplatte 11, in der sich eine bekannte und nicht näher dargestellte Auslauföffnung befindet, angeordnet. Die Öffnungsweite dieser Auflauföffnung läßt sich in bekannter und daher nicht näher dargestellter Weise mittels eines Schiebers 12 in unterschiedliche Öffnungsweiten einstellen. Die Schleuderscheiben 4 und 5 sind jeweils leicht lösbar auf den Schleuderscheibenantriebswellen 13 befestigt, so daß sie leicht durch andere Schleuderscheiben austauschbar sind.

Die jeweilige Schleuderscheibenantriebswelle 13 ragt aus dem Gehäuse 14 eines Winkelgetriebes 15 heraus, wobei der Antrieb der Winkelbetriebe 15 über ein Mittelgetriebe 16 von der Zapfwelle eines den Schleuderdüngerstreuers tragenden Ackerschleppers erfolgt. Die Winkelgetriebe 15 sind mit dem Mittelgetriebe 16 jeweils über die horizontale Antriebswelle 17 kraftschlüssig miteinander verbunden.

Die Winkelgetriebe 15 sind mittels der Schwenklagerungen 18 an dem unteren Querträger 19 des Rahmens 1 gelagert, so daß sie um die Schwenkachse 20, die mit der Mittellinie 21 der Antriebswellen 17 zusammenfällt, in ihrer Neigung verstellt werden können. Durch Verschwenken der Winkelgetriebe 15 um die mit der Mittellinie 21 der Antriebswellen 17 zusammenwirkenden Schwenkachse 20 lassen sich die Schleuderscheiben 4 und 5 in ihrer Neigung zur Bodenoberfläche derart verstellen, daß sie in einer nach vorne und in einer nach hinten geneigten Lage einstellbar sind. An jedem Schleuderscheibenantriebsgehäuse 14 ist die Stelleinrichtung 22 angeordnet. Diese Stelleinrichtung 22 besteht aus dem Schwenkhebel 23 und dem Stellantrieb 24. Jedem Winkelgetriebe 15 ist eine eigene Stelleinrichtung 22 zugeordnet. Der Stellantrieb 24 ist auf der Vorderseite der Maschine zwischen dem vorderen freien Ende 25 des Schwenkhebels 23 und dem Rahmen 1 der Maschine angeordnet. Jeder Schleuderscheibe 4 und 5 ist ein eigener Stellantrieb 24 zugeordnet, so daß die Schleuderscheiben 4 und 5 sowie unabhängig voneinander wie auch gemeinsam verschwenkbar sind.

Die Stellantriebe 24 sind als Stellmotore ausgebildet und über die Kabel mit der Fernbedienungseinrichtung 24 verbunden, so daß über die Fernbedienungseinrichtung 24 vom Schleppersitz aus, die Schleuderscheiben 4 und 5 verschwenkt werden können.

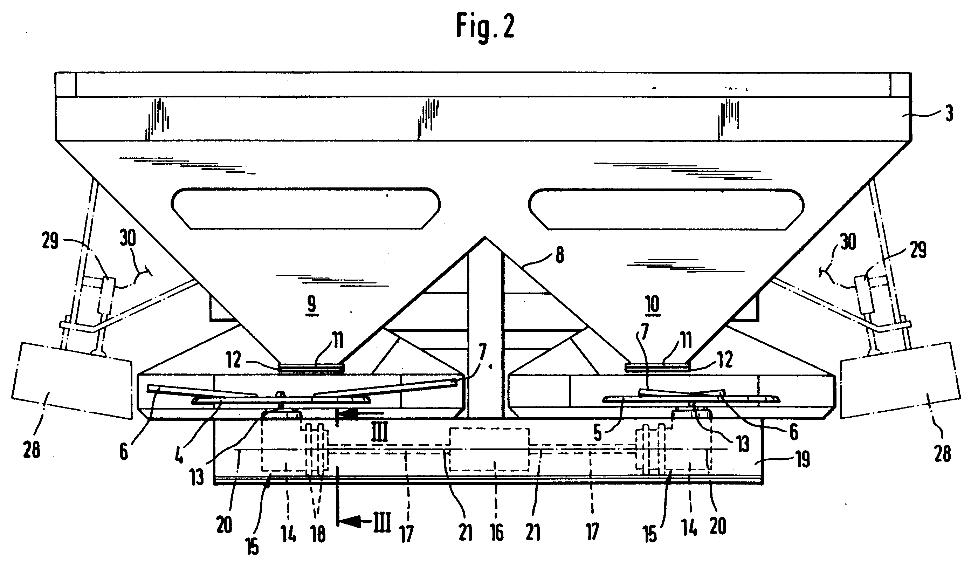

Wenn bei einem Schleuderstreuer seitlich neben den Schleuderscheiben 4 und 5 an den Außenseiten des Schleuderdüngerstreuers Düngerleitelemente 28, wie in Fig. 2 mit strichpunktierten Linien angedeutet, angeordnet sind, so sind diese Leitelemente 28 mittels der Stellantriebe 29 verschwenkbar. Über die Kabel 30 sind die Stellmotore 28 der Stellantriebe 29 ebenfalls mit der Fernbedienungseinrichtung 27 verbunden, so daß die Leitelemente 28 gemeinsam mit dem jeweiligen Schleuderscheibenantriebsgehäuse 14 und der zugeordneten Schleuderscheibe 4 oder 5 verschwenkbar sind. Damit die Leitelemente 28 gleichzeitig und automatisch mit den Schleuderscheiben 4 und 5 verschwenkt werden, also eine synchrone Verschwenkung stattfindet, sind die Schwenkbewegungen der Schleuderscheiben 4 und 5 und der zugeordneten Düngerleitelemente 28 über die in der Fernbedienungseinrichtung 27 angeordnete Verstelleinrichtung miteinander verknüpft.

Durch die Verstellmöglichkeit der Schleuderscheiben 4 und 5 ergeben sich folgende Vorteile:
Durch das nach hinten Schwenken der Schleuderscheibenantriebsgehäuse 14 ist eine bessere Zugänglichkeit zu den Schleuderscheiben 4 und 5 geschaffen, so daß ein leichter Scheibenwechsel möglich ist.

Werden die Scheiben 4 und 5 nach hinten-unten geneigt, so wird der Aufgabepunkt des Düngers gegen die Drehrichtung der Schleuderscheiben 4 und 5 nach vorne verlagert. Hierdurch wird das Streubild mehr in der Mitte als an den Außenseiten verändert. Werden die Scheiben nach hinten-oben geschwenkt, dann wandert der Düngeraufgabepunkt in die Richtung nach hinten, also wird die Düngermenge mehr nach außen verlagert. Somit kann durch eine Verschwenkung der Schleuderscheiben 4 und 5 das Streubild individuell korrigiert werden. Weiterhin ist es möglich, daß die Schleuderscheiben 4 und 5 unabhängig voneinander verstellbar sind, so daß die eine oder die andere, je nach den Erfordernissen verstellt werden kann. Dieses ist beispielsweise bei der Durchführung des Grenstreuens von Bedeutung. Weiterhin kann durch die Verschwenkung der Schleuderscheiben 4 und 5 die Arbeitsbreite verändert werden. Hierzu ist es erforderlich, um eine gleichmäßige Düngerausbringung zu gewährleisten, daß auch einseitig die Streumenge reduziert wird. Weiterhin hat ein nach hinten-oben Schwenkden der Schleuderscheiben für die Durchführung der Spätdüngung den Vorteil, daß ein "weicher" Streufächer sich ergibt, so daß die Düngerkörner "weich" von oben in den Getreidebestnd fallen.

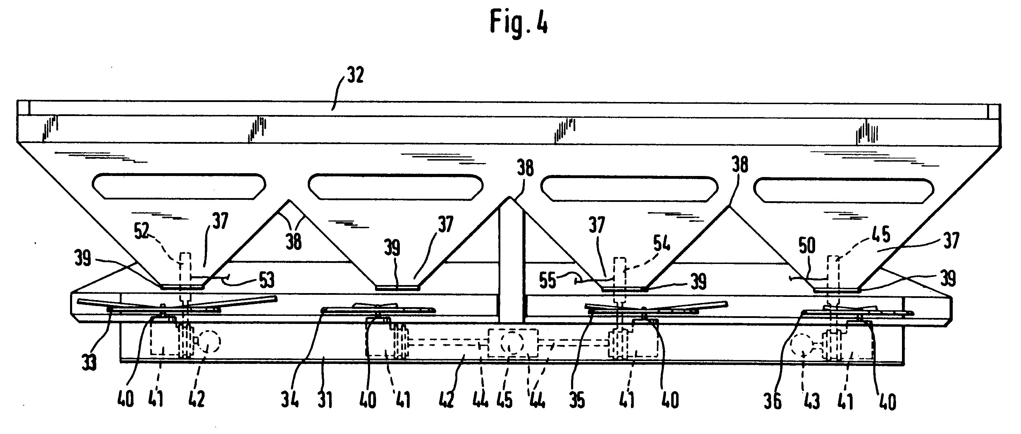

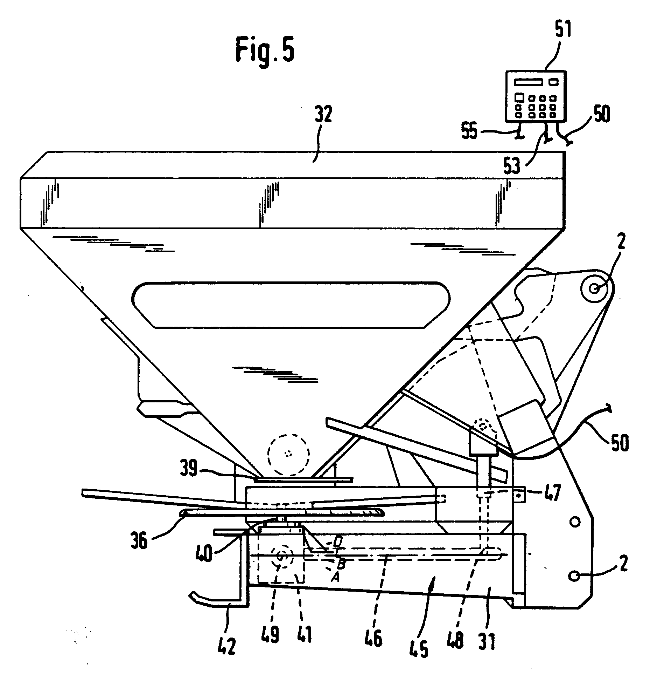

Der Schleuderdüngerstreuer gemäß den Fig. 4 und 5 weist den Rahmen 31, an dem die Dreipunktkupplungselemente 2 angeordnet sind, den Vorratsbehälter 32 sowie die Schleuderscheibe 33, 34, 35 und 36 mit auf ihnen angeordneten Wurfelementen, die eine unterschiedliche Länge aufweisen, auf. Die Wurfelemente können auf den Schleuderscheiben 33, 34, 35 und 36 in Scheibenebene winkelverschwenkbar angeordnet sein.

Der Verratsbehälter 32 ist in seinem unteren Bereich in die vier Auslauftrichter 37 durch die dachförmigen Teile 38 aufgeteilt. Unterhalb der Auslauftrichter 37 sind die Dosiereinrichtungen 39 angeordnet. Diese Dosiereinrichtungen 39 sind jeweils als Bodenplatte mit einer sich darin befindlichen Auslauföffnung sowie einem unterhalb der Bodenplatte und vor den Auslauföffnungen angeordneten Schieber ausgebildet. Die Öffnungsweite der Auslauföffnung läßt sich in bekannter und daher nicht näher dargestellter Weise mittels des Schiebers in unterschiedlicher Größe einstellen. Über die Dosiereinrichtung 39 wird den darunter angeordneten Schleuderscheiben 33, 34, 35 und 36 der sich im Vorratsbehälter 32 befindliche Dünger in einstellbarer Weise zugeführt. Durch die Schleuderscheiben 33, 34, 35 und 36 wird mittels der darauf angeordneten Wurfelemente der Dünger in Breitverteilung auf der zu bestreuenden Fläche verteilt Die Schleuderscheiben 33, 34, 35 und 36 können leicht lösbar auf den Schleuderscheibenantriebswellen 40 leicht lösbar befestigt sein, so daß sie leicht gegen andere Schleuderscheiben austauschbar sind.

Die jeweilige Schleuderscheibenantriebswelle 40 ragt aus den jeder Schleuderscheibe zugeordnetem Lagergehäuse 41 heraus. Diese Lagergehäuse 41 sind über Halterungen an der hinteren Querstrebe 42 des Rahmens 31 befestigt.

Die beiden äußeren Schleuderscheiben 33 und 36 werden jeweils über einen eigenen Ölmotor 42 bzw. 43 angetrieben. Die beiden mittleren Schleuderscheiben 34 und 35 sind über eine Getriebeverbindung 44 gemeinsam über den Ölmotor 45 anzutreiben.

Die Schleuderscheiben 33, 34, 35 und 36 sind über ihre Lagergehäuse derart am Querträger 42 des Rahmen 1 gelagert, so daß sie gegenüber den Dosiereinrichtungen 39 verschwenkt werden können. Hierzu ist den Lagergehäusen 41 jeweils eine im folgenden näher erläuterten Stelleinrichtung zum Verschwenken der Schleuderscheiben zugeordnet.

Die Stelleinrichtung 45 für die äußere Schleuderscheibe 36 besteht aus dem Schwenkhebel 46 und dem Stellantrieb 47. Der Schwenkhebel 46 ist an dem Lagergehäuse 41 befestigt. Der Stellantrieb 47, der als elektrischer Spindelmotor ausgebildet ist, ist am Rahmen 31 befestigt. Weiterhin sind die Stelleinrichtungen 47 und der Schwenkhebel 46 mittels des Bolzens 48 gelenkig miteinander verbunden, so daß über den Stellantrieb 47 der Schwenkhebel 46 und somit das Lagergehäuse 41 und die Schleuderscheibe 36 um die Schwenkachse 49 verschwenkt werden können. Somit kann also die Schleuderscheibe 36 gegenüber der Dosiereinrichtung 39 verstellt werden. Aufgrund dieser Anordnung ist die Schleuderscheibe 36 sowohl in ihrer Lage zur Dosiereinrichtung 39 wie auch in ihrer Neigung zur Bodenoberfläche derart zu verstellen, daß sie in einer nach vorne und in einer nach hinten geneigten Lage sowie in einer horizontalen Lage einstellbar ist. Über das Kabel 50 ist die Stelleinrichtung 47 mit der elektronischen Regeleinrichtung 50, die auf dem Schlepper vorzugsweise angeordnet ist verbunden. Gleichzeitig bildet die elektronische Regeleinrichtung 50 die Fernbedienung für die Stelleinrichtung 47.

Der Schleuderscheibe 33 ist ebenfalls die aus der Stelleinrichtung 52 bestehende Schwenkeinrichtung zugeordnet. Diese Schwenkeinrichtung 52 ist entsprechend der Stelleinrichtung 45 ausgebildet. Über das Kabel 53 ist die Stelleinrichtung 52 mit der elektronischen Regeleinrichtung 51 verbunden. Den beiden inneren Schleuderscheiben 34 und 35 ist eine gemeinsame Stelleinrichtung 54 zugeordnet. Die Stelleinrichtung 54 ist über das Kabel 55 mit der elektronischen Regeleinrichtung 51 verbunden. Über die Stelleinrichtung 54 können die Lagergehäuse 41 und somit die Schleuderscheiben 34 und 35 in ihrer Neigung um die Schwenkachse 49 verschwenkt werden, so daß ihre Lage zur Bodenoberfläche sowie zu den Dosiereinrichtung 39 verändert werden kann.

In der elektronischen Regeleinrichtung ist ein programmierbarer elektronischer Rechner angeordnet, in dem ein Programm zur Einstellung der Lage der schleuderscheiben abgespeichert ist, so daß nach Vorgabe des in dem elektronischen Rechners abgespeicherten Programmes die Schleuderscheiben 33, 34, 35 und 36 über die elektronische Regeleinrichtung 51 und der von ihr angesteuerten Stelleinrichtungen 45, 52 und 54 verstellt werden können.

Diese Anordnung ist so getroffen, daß wahlweise sämtliche Stelleinrichtungen 45, 52 und 54 gemeinsam angesteuert werden, so daß die Schleuderscheiben 33, 34, 35 und 36 gemeinsam und in gleicher Größe und Weise verstellt werden können.

Es ist jedoch auch so möglich, daß die beiden inneren Schleuderscheiben 34 und 35 gemeinsam und die äußeren Schleuderscheiben 33 und 36 gemeinsam, jedoch unabhängig und anderer Weise und anderer Größe von den inneren Schleuderscheiben 34 und 35 verstellt werden können. Auch ist das Programm so ausgelegt im Rechner der elektronischen Regeleinrichtung 51, daß die äußeren Schleuderscheiben 33 und 36 unabhängig voneinander und in verschiedener Weise verstellt bzw. verschwenkt werden können. Somit ist eine individuelle Streubildkorrektur während der Streuarbeit möglich.

## Patentansprüche

1. Schleuderdüngerstreuer mit einem Vorratsbehälter und zumindest zwei unterhalb des Vorratsbehälters angeordneten und rotierend angetriebenen Schleuderscheiben (4,5,33,34,35,36), denen die sich im Vorratsbehälter befindlichen Düngemittel über Dosiereinrichtungen in einStellbaren Mengen zugeführt werden, wobei die Schleuderscheiben (4,5,33,34,35,36) zumindest um eine quer zur Fahrtrichtung verlaufende Schwenkachse verschwenkbar angeordnet und in unterschiedlichen Stellungen gegenüber der Horizontalen einstellbar sind, dadurch gekennzeichnet, daß den Schleuderscheiben (4,5,33,34,35,36) eine einen Stellantrieb (24) aufweisende Stelleinrichtung (22) zugeordnet ist, mittels welcher die Schleuderscheiben (4,5,33,34,35,36) verschwenkbar sind, und daß die Stellantriebe (24) für die Verschwenkung der Schleuderscheiben (4,5,33,34,35,36) mit einer Fernbedienungseinrichtung verbunden sind.

2. Schleuderdüngerstreuer nach Anspruch 1, wobei unterhalb des Vorratsbehälters zumindest vier Schleuderscheiben angeordnet sind, dadurch gekennzeichnet, daß zumindest jeder zweiten Schleuderscheibe (33,34,35,36) ein eigener Stellantrieb (24) zugeordnet ist.

3. Schleuderdüngerstreuer nach Anspruch 1 und/oder 2, dadurch gekennzeichnet, daß die Schleuderscheiben (4,5,33,34,35,36) über einen gemeinsamen Stellantrieb (24) gemeinsam verschwenkbar sind.

4. Schleuderdüngerstreuer nach Anspruch 2, dadurch gekennzeichnet, daß die beiden inneren Schleuderscheiben (34,35) gemeinsam und die beiden äußeren Schleuderscheiben (33,36) gemeinsam verstellbar sind.

5. Schleuderdüngerstreuer nach Anspruch 4, dadurch gekennzeichnet, daß die inneren Schleuderscheiben (33,35) gegenüber den äußeren Schleuderscheiben (33,36) relativ verstellbar sind.

6. Schleuderdüngerstreuer nach einem oder mehreren der vorstehenden Ansprüche, dadurch gekennzeichnet, daß die beiden äußeren Schleuderscheiben (33,36) gemeinsam gegenüber den beiden inneren Schleuderscheiben (34,35) verstellbar sind.

7. Schleuderdüngerstreuer nach einem oder mehreren der vorstehenden Ansprüche, dadurch gekennzeichnet, daß die beiden inneren Schleuderscheiben (34,35) gemeinsam und die beiden äußeren Schleuderscheiben (33,36) unabhängig voneinander relativ zu den inneren Schleuderscheiben (34,35) sowie zueinander verstellbar sind.

8. Schleuderdüngerstreuer nach einem oder mehreren der vorstehenden Ansprüche, dadurch gekennzeichnet, daß die Stellantriebe (24) mit einer elektronischen Regeleinrichtung, beispielsweise einem programmierbaren elektronischen Rechner verbunden sind, so daß nach der Vorgabe des in dem elektronischen Rechner abgespeicherten Programmes die Schleuderscheiben (4,5) einstellbar oder verstellbar sind.

9. Schleuderdüngerstreuer nach einem oder mehreren der vorstehenden Ansprüche, dadurch gekennzeichnet, daß die Schleuderscheiben (4,5) um eine quer zur Fahrtrichtung verlaufende Achse verschwenkbar sind.

10. Schleuderdüngerstreuer nach einem oder mehreren der vorstehenden Ansprüche, dadurch gekennzeichnet, daß die Schleuderscheiben (4,5) derart am Rahmen des Schleuderdüngerstreuers angeordnet sind, daß sie sowohl um eine in wie auch eine quer zur Fahrtrichtung verlaufende Achse verschwenkbar sind, wobei zum Verschwenken der Schleuderscheiben in der jeweiligen Richtung ein eigener Stellmotor vorgesehen ist.

11. Schleuderdüngerstreuer nach einem oder mehreren der vorstehenden Ansprüche, dadurch gekennzeichnet, daß die Schleuderscheiben mit Lagergehäuse in einem kugelartigen Lager am Rahmen angeordnet sind, so daß die Schleuderscheiben in jeder Richtung mittels der Stellmotore verstellbar und in verschiedenen Stellung einstellbar sind.

12. Schleuderdüngerstreuer nach Anspruch 1, wobei die Schleuderscheiben (4,5) über einen Winkelantrieb (15) angetrieben werden, der eine quer zur Fahrtrichtung liegend verlaufende Antriebswelle (17) aufweist, dadurch gekennzeichnet, daß die Schwenkachse (20), um welche die Schleuderscheibe (4,5) verschwenkbar ist, mit der Mittellinie (21) der Antriebswelle (17) zusammenfällt.

13. Schleuderdüngerstreuer nach Anspruch 1 oder 12, dadurch gekennzeichnet, daß das Antriebsgehäuse (14) für die Schleuderscheibe (4,5) verschwenkbar am Rahmen (1,19) in einem Schwenklager (18) angeordnet sind.

14. Schleuderdüngerstreuer mit zumindest zwei Schleuderscheiben, denen jeweils ein Antriebsgehäuse zugeordnet ist, nach Anspruch 1, dadurch gekennzeichnet, daß jedes Antriebsgehäuse (14) für die Schleuderscheiben (4,5) schwenkbar angeordnet ist.

15. Schleuderdüngerstreuer nach einem oder mehreren der vorstehenden Ansprüche, dadurch gekennzeichnet, daß den Schleuderscheibenantriebsgehäusen (14) eine Stelleinrichtung (22) zugeordnet ist, mittels welcher die Schleuderscheiben (4,5) verschwenkbar sind.

16. Schleuderdüngerstreuer nach einem oder mehreren der vorstehenden Ansprüche, dadurch gekennzeichnet, daß die Stelleinrichtung (22) auf der Vorderseite der Maschine angeordnet ist.

17. Schleuderdüngerstreuer mit zumindest zwei Schleuderscheiben, nach Anspruch 1, dadurch gekennzeichnet, daß die Schleuderscheiben (4,5), vorzugsweise über einen Stellantrieb (24), gemeinsam verschwenkbar sind.

18. Schleuderdüngerstreuer nach einem oder mehreren der vorstehenden Ansprüche, wobei der Schleuderdüngerstreuer zumindest zwei Schleuderscheiben aufweist, dadurch gekennzeichnet, daß jedem Schleuderscheibenantriebsgehäuse (14) ein eigener Stellantrieb (24) zugeordnet ist.

19. Schleuderdüngerstreuer nach einem oder mehreren der vorstehenden Ansprüche, dadurch gekennzeichnet, daß der Stellantrieb (24) mit einer Fernbedienungseinrichtung (27) verbunden ist.

20. Schleuderdüngerstreuer nach einem oder mehreren der vorstehenden Ansprüche, dadurch gekennzeichnet, daß der Stellantrieb als Stellmotor (24) ausgebildet ist.

21. Schleuderdüngerstreuer nach einem oder mehreren der vorstehenden Ansprüche, wobei seitlich neben den Schleuderscheiben an den Außenseiten des Schleuderdüngerstreuers Düngerleitelemente angeordnet sind, dadurch gekennzeichnet, daß die Leitelemente (28) gemeinsam mit dem Schleuderscheibenantriebsgehäuse (14) verschwenkbar sind.

22. Schleuderdüngerstreuer nach einem oder mehreren der vorstehenden Ansprüche, dadurch gekennzeichnet, daß die Leitelemente (28) gleichzeitig mit der zugeordneten Schleuderscheibe (4,5) verschwenkbar sind.

23. Schleuderdüngerstreuer nach einem oder mehreren der vorstehenden Ansprüche, dadurch gekennzeichnet, daß die Schwenkbewegungen der Schleuderscheiben (4,5) und der zugeordneten Düngerleitelemente (28) über eine Verstelleinrichtung miteinander verknüpft sind.

## Claims

1. Centrifugal fertiliser broadcaster, including a hopper and at least two rotatably driven centrifugal discs (4, 5, 33, 34, 35, 36), which are disposed beneath the hopper and to which the fertilisers, situated in the hopper, are supplied in adjustable quantities via metering means, the centrifugal discs (4, 5, 33, 34, 35, 36) being disposed so as to be pivotable about a pivot axis, which extends transversely relative to the direction of travel, and being adjustable in variable positions relative to the horizontal, characterised in that the centrifugal discs (4, 5, 33, 34, 35, 36) have associated therewith a setting arrangement (22), which includes a setting drive (24) and by means of which setting arrangement the centrifugal discs (4, 5, 33, 34, 35, 36) are pivotable, and in that the setting drives (24) for the pivotal movement of the centrifugal discs (4, 5, 33, 34, 35, 36) are connected to a remote control device.

2. Centrifugal fertiliser broadcaster according to claim 1, wherein at least four centrifugal discs are disposed beneath the hopper, characterised in that at least every second centrifugal disc (33, 34, 35, 36) has its own setting drive (24) associated therewith.

3. Centrifugal fertiliser broadcaster according to claim 1 and/or 2, characterised in that the centrifugal discs (4, 5, 33, 34, 35, 36) are jointly pivotable via a common setting drive (24).

4. Centrifugal fertiliser broadcaster according to claim 2, characterised in that the two inner centrifugal discs (34, 35) are jointly displaceable, and the two outer centrifugal discs (33, 36) are jointly displaceable.

5. Centrifugal fertiliser broadcaster according to claim 4, characterised in that the inner centrifugal discs (33, 35) are displaceable relative to the outer centrifugal discs (33, 36).

6. Centrifugal fertiliser broadcaster according to one or more of the preceding claims, characterised in that the two outer centrifugal discs (33, 36) are jointly displaceable relative to the two inner centrifugal discs (34, 35).

7. Centrifugal fertiliser broadcaster according to one or more of the preceding claims, characterised in that the two inner centrifugal discs (34, 35) are jointly displaceable, and the two outer centrifugal discs (33, 36) are displaceable independently of each other relative to the inner centrifugal discs (34, 35) and relative to each other.

8. Centrifugal fertiliser broadcaster according to one or more of the preceding claims, characterised in that the setting drives (24) are connected to an electronic control device, for example a programable electronic computer, so that the centrifugal discs (4, 5) are adjustable or displaceable according to the control of the program stored in the electronic computer.

9. Centrifugal fertiliser broadcaster according to one or more of the preceding claims, characterized in that the centrifugal discs (4, 5) are pivotable about an axis extending transversely relative to the direction of travel.

10. Centrifugal fertiliser broadcaster according to one or more of the preceding claims, characterised in that the centrifugal discs (4, 5) are disposed on the frame of the centrifugal fertiliser broadcaster in such a manner that they are pivotable about an axis which extends both in the direction of travel and transversely relative to the direction of travel, a particular setting motor being provided to pivot the centrifugal discs in the respective direction.

11. Centrifugal fertiliser broadcaster according to one or more of the preceding claims, characterised in that the centrifugal discs are disposed on the frame with a bearing housing in a spherical bearing, so that the centrifugal discs are displaceable in each direction by means of the setting motors and are adjustable in various positions.

12. Centrifugal fertiliser broadcaster according to claim 1, wherein the centrifugal discs (4, 5) are driven via an angle drive (15), which includes a drive shaft (17) extending transversely relative to the direction of travel, characterised in that the pivot axis (20), about which the centrifugal disc (4, 5) is pivotable, coincides with the centre line (21) of the drive shaft (17).

13. Centrifugal fertiliser broadcaster according to claim 1 or 12, characterised in that the drive housing (14) for the centrifugal disc (4, 5) is pivotably disposed on the frame (1, 19) in a pivot bearing (18).

14. Centrifugal fertiliser broadcaster, including at least two centrifugal discs, which each have a respective drive housing associated therewith, according to claim 1, characterised in that each drive housing (14) for the centrifugal discs (4, 5) is pivotably disposed.

15. Centrifugal fertiliser broadcaster according to one or more of the preceding claims, characterised in that the centrifugal disc drive housings (14) have a setting arrangement (22) associated therewith, by means of which setting arrangement the centrifugal discs (4, 5) are pivotable.

16. Centrifugal fertiliser broadcaster according to one or more of the preceding claims, characterised in that the setting arrangement (22) is disposed on the front side of the machine.

17. Centrifugal fertiliser broadcaster having at least two centrifugal discs according to claim 1, characterised in that the centrifugal discs (4, 5) are jointly pivotable, preferably via a setting drive (24).

18. Centrifugal fertiliser broadcaster according to one or more of the preceding claims, wherein the centrifugal fertiliser broadcaster includes at least two centrifugal discs, characterised in that each centrifugal disc drive housing (14) has its own setting drive (24) associated therewith.

19. Centrifugal fertiliser broadcaster according to one or more of the preceding claims, characterised in that the setting drive (24) is connected to a remote control device (27).

20. Centrifugal fertiliser broadcaster according to one or more of the preceding claims, characterised in that the setting drive is configured as setting motor (24).

21. Centrifugal fertiliser broadcaster according to one or more of the preceding claims, wherein fertiliser guiding elements are disposed laterally adjacent the centrifugal discs on the outer sides of the centrifugal fertiliser broadcaster, characterised in that the guiding elements (28) are jointly pivotable with the centrifugal disc drive housing (14).

22. Centrifugal fertiliser broadcaster according to one or more of the preceding claims, characterised in that the guiding elements (28) are simultaneously pivotable with the associated centrifugal disc (4, 5).

23. Centrifugal fertiliser broadcaster according to one or more of the preceding claims, characterised in that the pivotal movements of the centrifugal discs (4, 5) and of the associated fertiliser guiding elements (28) are interlinked via an adjusting means.

## Revendications

1. Epandeur centrifuge d'engrais comprenant un réservoir d'alimentation et au moins deux disques d'épandage (4, 5 ; 33, 34, 35, 36) entraînés en rotation en dessous du réservoir, et recevant l'engrais du réservoir par l'intermédiaire d'installations de dosage le fournissant en quantité réglée, les disques d'épandage (4, 5 ; 33, 34, 35, 36) pouvant être réglés dans des positions différentes par rapport à la direction horizontale par basculement autour d'un axe transversal à la direction de déplacement, caractérisé en ce que les disques d'épandage (4, 5 ; 33, 34, 35, 36) sont munis d'une installation de réglage (22) comprenant un actuateur (24) qui permet de basculer les disques d'épandage (4, 5 ; 33, 34, 35, 36) et les actuateurs (24) sont reliés à une installation de télécommande pour basculer les disques d'épandage (4, 5 ; 33, 34, 35, 36).

2. Epandeur centrifuge d'engrais selon la revendication 1, avec en dessous du réservoir d'alimentation au moins quatre disques d'épandage, caractérisé en ce qu'au moins chaque second disque d'épandage (33, 34, 35, 36) comprend un actuateur (24) propre.

3. Epandeur centrifuge d'engrais selon la revendication 1 et/ou 2, caractérisé en ce que les disques d'épandage (4, 5 ; 33, 34, 35, 36) peuvent être basculés en commun par un actuateur commun (24).

4. Epandeur centrifuge d'engrais selon la revendication 2, caractérisé en ce que les deux disques d'épandage intérieurs (34, 35) sont réglables en commun et les deux disques d'épandage extérieurs (33, 36) sont réglables en commun.

5. Epandeur centrifuge d'engrais selon la revendication 4, caractérisé en ce que les disques d'épandage intérieurs (33, 35) sont réglables par rapport aux disques d'épandage extérieurs (33, 36).

6. Epandeur centrifuge d'engrais selon une ou plusieurs des revendications précédentes, caractérisé en ce que les deux disques d'épandage extérieurs (33, 36) sont réglables en commun par rapport aux deux disques d'épandage intérieurs (34, 35).

7. Epandeur centrifuge d'engrais selon une ou plusieurs des revendications précédentes, caractérisé en ce que les deux disques d'épandage intérieurs (34, 35) sont réglables en commun et les deux disques d'épandage extérieurs (33, 36) sont réglables indépendamment l'un de l'autre par rapport aux disques d'épandage intérieurs (34, 35) et entre eux.

8. Epandeur centrifuge d'engrais selon une ou plusieurs des revendications précédentes, caractérisé en ce que les actuateurs (24) sont reliés à une installation électronique de réglage par exemple un calculateur électronique programmable pour qu'après avoir prédéterminé le programme du calculateur électronique, les disques d'épandage (4, 5) puissent être réglés ou modifiés.

9. Epandeur centrifuge d'engrais selon une ou plusieurs des revendications précédentes, caractérisé en ce que les disques d'épandage (4, 5) peuvent basculer autour d'un axe transversal à la direction de déplacement.

10. Epandeur centrifuge d'engrais selon une ou plusieurs des revendications précédentes, caractérisé en ce que les disques d'épandage (4, 5) sont montés par rapport au châssis de l'épandeur centrifuge pour qu'ils puissent à la fois basculer autour d'un axe transversal à la direction de déplacement que suivant un axe correspondant à cette direction de déplacement et un moteur de réglage indépendant est prévu pour basculer les disques d'épandage dans chacune des directions.

11. Epandeur centrifuge d'engrais selon une ou plusieurs des revendications précédentes, caractérisé en ce que les disques d'épandage et les boîtiers de palier sont montés dans un palier de type sphérique sur le châssis pour que les disques puissent être réglés dans n'importe quelle direction à l'aide des moteurs de réglage et puissent se bloquer dans les différentes positions.

12. Epandeur centrifuge d'engrais selon la revendication 1, caractérisé en ce que les disques d'épandage (4, 5) sont entraînés par l'intermédiaire d'une transmission de renvoi d'angle (15) qui présente un axe d'entraînement (17) transversal à la direction de déplacement, caractérisé en ce que l'axe de basculement (20) autour duquel bascule le disque d'épandage (4, 5) correspond à l'axe géométrique (21) de l'axe d'entraînement (17).

13. Epandeur centrifuge d'engrais selon la revendication 1 ou 12, caractérisé en ce que le boîtier de transmission (14) du disque d'épandage (4, 5) est monté pivotant sur le châssis (1, 19) dans un palier de pivotement (18).

14. Epandeur centrifuge d'engrais équipé d'au moins deux disques d'épandage auxquels est associé chaque fois un boîtier de transmission selon la revendication 1, caractérisé en ce que chaque boîtier de transmission (14) est monté pivotant pour les disques d'épandage (4, 5).

15. Epandeur centrifuge d'engrais selon une ou plusieurs des revendications précédentes, caractérisé en ce qu'au boîtier de transmission (14) des disques d'épandage est associée l'installation de réglage (22) qui permet de basculer les disques d'épandage (4, 5).

16. Epandeur centrifuge d'engrais selon une ou plusieurs des revendications précédentes, caractérisé en ce que l'installation de réglage (22) se trouve sur le côté avant de la machine.

17. Epandeur centrifuge d'engrais équipé au moins de deux disques d'épandage selon la revendication 1, caractérisé en ce que les disques d'épandage (4, 5) peuvent basculer en commun de préférence par l'intermédiaire d'un actuateur (24).

18. Epandeur centrifuge d'engrais selon une ou plusieurs des revendications précédentes, équipé d'au moins deux disques d'épandage, caractérisé en ce qu'un actuateur (24) indépendant est associé à chaque boîtier de transmission (14) des disques d'épandage.

19. Epandeur centrifuge d'engrais selon une ou plusieurs des revendications précédentes, caractérisé en ce que l'actuateur (24) est relié à une installation de télécommande (27).

20. Epandeur centrifuge d'engrais selon une ou plusieurs des revendications précédentes, caractérisé en ce que l'actuateur est un moteur de réglage.

21. Epandeur centrifuge d'engrais selon une ou plusieurs des revendications précédentes, avec à côté des disques d'épandage, sur le côté extérieur de l'épandeur centrifuge, des éléments de guidage de l'engrais, caractérisé en ce que les éléments de guidage (28) basculent en commun avec le boîtier de transmission des disques d'épandage (14).

22. Epandeur centrifuge d'engrais selon une ou plusieurs des revendications précédentes, caractérisé en ce que les éléments de guidage (28) basculent en même temps que les disques d'épandage (4, 5) associés.

23. Epandeur centrifuge d'engrais selon une ou plusieurs des revendications précédentes, caractérisé en ce que les mouvements de basculement des disques d'épandage (4, 5) et des éléments de guidage d'engrais (28) associés sont combinés par une installation de réglage.
